# EUROPEAN PATENT APPLICATION

(11) **EP 1 447 000 A2**
(43) Date of publication of application: **18.08.2004**
(21) Application number: 04100361.7
(22) Date of filing: 02.02.2004
(51) Int. Cl.: A01G 9/10

(54) **Method and apparatus for a separate handling of plants**

(30) Priority: 07.02.2003 NL 1022630
(71) Applicant: L&P Group B.V., 5504 EB Veldhoven (NL)
(72) Inventor: VAN DE LAAR, Johannes Petrus Maria, 5504 EB, Veldhoven (NL); OSSEWAARDE, Roel, 5061 WE, Oisterwijk (NL); VAN DER HORST, Gijsbertus Nicolaas Maria, 5541 VK, Reusel (NL)
(74) Representative: Smeets, Eugenius Theodorus J. M.

(57) **Abstract**

A method is described for the separate handling of plants (1) supplied in holders (42,48), which plants (1) are sorted as to quality, approved plants (1) only being admitted to said handling.

In particular, said evaluation holders (42,48) are transparent and are scanned by a light beam, whereupon radiation transmission values or reflection values are evaluated in combination in a plurality of longitudinal positions so as to provide an indication on the presence of a plant (1) of good quality, a plant (1) of bad quality, or no plant (1) at all.

## Description

The invention relates to a method of separately handling plants that are supplied in holders, which plants are to be sorted as to quality and only approved plants are admitted to further handling, as defined in the opening part of claim 1. The term 'plants' herein also covers parts of plants, in particular cuttings such as those of, for example, chrysanthemums. Such plants or plant parts are delivered in large quantities and are to be separated before further handling, in a uniform manner if possible, and are then processed further, for example planted and/or placed in containers.

A prior-art Dutch patent 1 006 694 published 990401 describes a method whereby an air flow is blown against the plants from below, whereupon the plants move downward with the force of gravity and the air flow along the wall of a cylindrical vessel for entering consecutive openings in a rim of vertical openings in mutually separate positions. Another, co-pending patent application from the present inventor/applicant relates to a two-dimensional matrix of placement compartments into which the plants are inserted through cooperation between a vertical air flow and the force of gravity. The effective throughput of positioned plants is increased thereby. Neither method, however, provides a certainty that all possible positions will be correctly filled with a plant.

It is accordingly among the objects of the present invention to ascertain unequivocally in a machine-based manner whether a given position has actually been filled with a plant in the correct manner.

The invention in one of its aspects is for this purpose characterized in that the holders are transparent and are scanned by a light beam in transverse direction in a plurality of longitudinal positions, such that radiation transmission values or reflection values are evaluated in combination in a plurality of longitudinal positions so as to provide an indication on the presence of a plant of good quality, a plant of bad quality, or no plant at all. Plants can thus be selected which have a length and other parameters lying within an approved range, while the method is comparatively insensitive to whether the plant has been introduced far or less far into the holder.

In a preferred embodiment, the evaluation holders are substantially tubular in shape, approved plants are taken out at one end of the evaluation holder by an air flow, and other evaluation holders with contents are emptied at a second end of the evaluation holder. A plant is spotted and selected for further treatment with a high degree of certainty in this manner.

According to a further preferred embodiment, plants taken out at said first end are accommodated in a handling holder. Such a handling holder renders it possible to handle the often fragile plants without risk.

According to a further preferred embodiment, said handling holder is provided at one end with a magnetically operating element that is accommodated in a ring, and said handling holder is put in an upright position for further processing through cooperation between said element and a second magnetically operating element that is accommodated in a bottom plate. It becomes much easier to plant such a plant then.

According to a further preferred embodiment, said light beam scans a row of evaluation holders in parallel, and the radiation transmission values or reflection values of the individual evaluation holders are separated by a digital processing element. This renders an automatic processing of the data very easy.

According to a further preferred embodiment, a plant of good quality is one that is judged to have a sufficient longitudinal dimension, a sufficient lateral dimension of the leaf-bearing portion, and/or a satisfactory aspect ratio. These are criteria that are easy to judge and unequivocal.

According to a further preferred embodiment, said plants are supplied in a two-dimensional matrix of placement compartments connected at an end face to said evaluation holders, whereupon the plants are blown or sucked by an air flow so as to be transferred into a row of said evaluation holders arranged in parallel. This transfer configuration considerably simplifies the parallel evaluation of the plant placement by optical means.

According to a further preferred embodiment, said transfer takes place while the axial directions of said evaluation holders and placement compartments are substantially horizontal. The evaluation and the subsequent selection can be readily carried out in this manner.

According to a further preferred embodiment, the connection at an end face takes place at one side of the tapering placement compartments where their openings are smallest. The transition from the tapering placement compartments to the evaluation holders causes the movement of the plants to be without risks.

The invention also relates to an apparatus for implementing the method of claim 1 for the separate handling of plants supplied in holders, comprising a sorting mechanism whereby the plants are sorted as to quality and only approved plants are admitted to further processing, characterized in that said evaluation holders are transparent, and the apparatus comprises a light evaluation mechanism which scans the evaluation holders with a light beam in a plurality of longitudinal positions, and radiation transmission values or reflection values are evaluated in a processor in combination for a plurality of longitudinal positions so as to form an indication on the presence of a plant of good quality, a plant of bad quality, or no plant at all. The combination of propelling the plants by means of an air flow and optically evaluating their quality was found to be highly reliable.

According to a preferred embodiment of the apparatus, a handling holder is provided for accommodating plants taken out at said first end, which handling holder is provided at one end with a magnetically operating element accommodated in a ring for keeping the handling holder in an upright position through cooperation with a second magnetically operating element arranged below a bottom plate and for displacing the handling holder for further treatment. The plants that are to be given further treatment are vertically positioned substantially without errors by this combination. The plants may be transferred from a horizontal evaluation holder into a handling holder that is already vertical with respect to the bottom plate via a (hollow) elbow tube. It is also possible for the plants to be moved from a horizontal evaluation holder into a horizontal handling holder connecting to the former. If present in a rotary support, the handling holder - after the plant has been inserted therein - may be positioned on the bottom plate through a rotary movement through 90 degrees.

According to a further preferred embodiment of the apparatus, said evaluation holders are fastened to a continuous loop of drive locations. A continuous operation is advantageously made possible thereby.

In a particularly favorable modification of the apparatus, the evaluation holders are driven in an indexed manner such that after a first indexing step a number of evaluation holders are evaluated, after a further indexing step the plants of good quality are inserted into the handling holders, and after one or several more indexing steps the plants of bad quality are moved into a return track or reject track. A particularly efficient operation free from malfunctions is obtained thereby.

The displacement of plants or plant cuttings is achieved in the simplest manner by means of a flow of (compressed) air supplied via a remote-controlled valve. A suction method may alternatively be used, if so desired, for example through so-termed venturi tubes.

These and other elements, aspects, and advantages of the invention will now be described in more detail below with reference to preferred embodiments of the invention and in particular with reference to the accompanying drawings, in which:
Fig. 1 shows a feeder device for use in the invention,
Fig. 2 is a general view of an apparatus according to the invention,
Fig. 3 shows a configuration for filling the evaluation holders,
Fig. 4 shows a configuration for evaluating the holders,
Fig. 5 shows a configuration for emptying the evaluation holders,
Fig. 6 shows a configuration for manipulating the handling holders, and

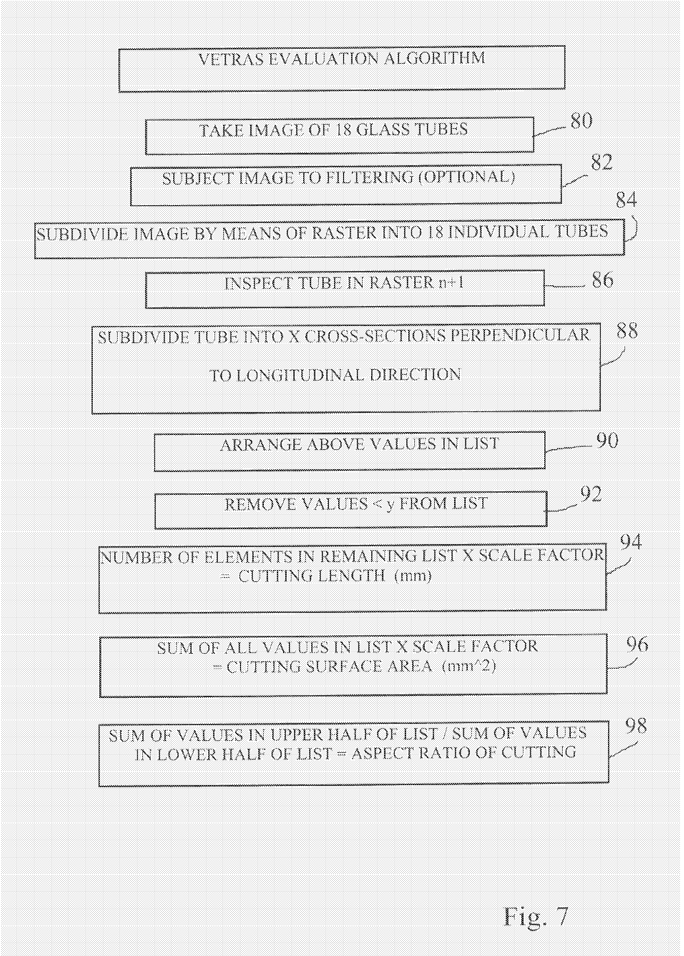

Fig. 7 is a flowchart of the holder evaluation procedure.

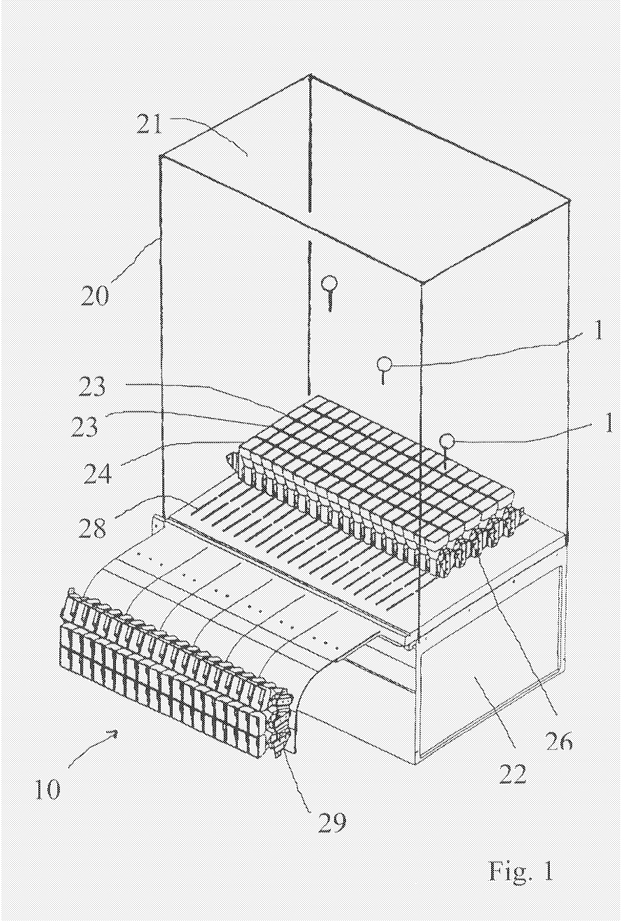

Fig. 1 illustrates a feeder device for use with the invention. A screened box 20 offers space to placement compartments 24 which are arranged in a rectangular matrix; each row of the matrix has eighteen compartments in this case by way of example. These eighteen compartments are fixed to one another in a row by means of a construction not shown here. Each row furthermore has an end mechanism 26. A similar mechanism (not visible) is fastened to the other end. These mechanisms 26 are flexibly interconnected such that each row of placement compartments as it were forms a link in a very wide chain. As is indicated at 29, the chain can thus allow a certain bending and is preferably formed so as to be continuous. The screened box 20 is placed on a box 22 providing space for, for example, accommodating an air pump, fan, or the like for generating the necessary air flows. These elements have not been shown for the sake of simplicity. Chrysanthemum cuttings 1 are introduced into the box 20 at or adjacent an upper side 21 of this box 20.

The air is blown from the lower box 22 through slots 28, which are preferably provided each in a location corresponding to a slot position between consecutive placement compartments of a matrix row, into the system of slots 23 between the upper sides of the placement compartments 24. Since the placement compartments are on the upper side of the box 22, their lower sides may be considered as being practically closed to the air flow discussed above. Owing to their chain-type construction, the placement compartments can be readily driven in longitudinal direction of the 'chain'. This mechanism is not shown in the drawings. If this takes place in steps corresponding to the pitch of the chain, a next row of placement compartments will arrive at the level of a filling mechanism (not shown) each time, which mechanism can then fill this next row of compartments, or a portion thereof, with plants 1. Filling of two or possibly more rows of compartments is also conceivable. A more or less continuous drive is also possible. An opening for the discharge of the placement compartments is present at the front of the box 20; they are fed in through a similar opening at the back of the box. The downward bending of the 'chain' causes the placement compartment axes to be practically horizontal in position 29.

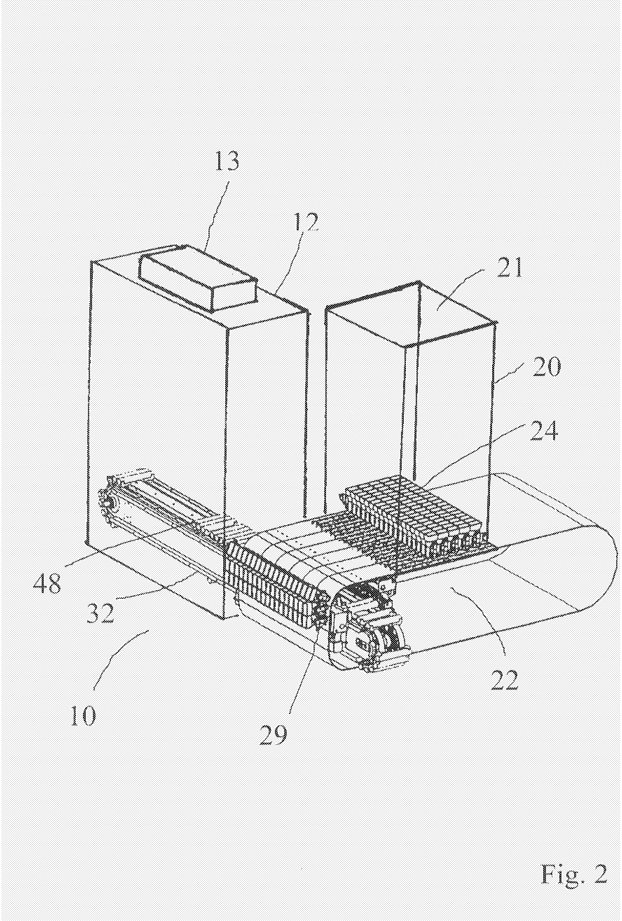

Fig. 2 is a general view of an apparatus according to the invention. The placement compartments are partly shown: they are filled adjacent position 24; adjacent position 29 the plants are transferred from the placement compartments 24 into evaluation holders 48 by means of blower or suction air, whereupon the empty placement compartments move back along the bottom track to the position 24 again. The evaluation holders are fastened to a second continuous belt 32 and move stepwise and in groups from the take-up position 29 to a next position further to the back along the belt 32. In this case a group comprises eighteen evaluation holders 48, the same number as there are placement compartments in a row. After one or several such steps, for example, the evaluation holders enter an evaluation position where they are irradiated with light so as to ascertain the quality and presence or absence of a plant 1 in the respective evaluation holder 48. The evaluation position here is located inside a further box 12 which is impermeable to light. The evaluation is performed by a digital camera 13 present at the upper side of the further box 12. In a preferred embodiment, this is again done in groups, one group being the same size as the number of placement compartments in a row. It is possible in principle to perform this for some other group size in parallel, for example for a group of nine holders, and more than eighteen is also possible in principle. In a next step, preferably after a further displacement, evaluation holders with approved contents are emptied towards the rear by means of blower or suction air, and evaluation holders with rejected contents are emptied towards the front, again preferably in a subsequent step. Rejected contents may be formed by a plant of incorrect size or other deviations, by more than one plant, or by alien objects or substances. After emptying, the evaluation holders are returned to position 29 again. Rejected plants, for example plants that were together in one holder or had the wrong orientation, may be returned to box 20 to be subjected to the process once more. Plants not complying with the requirements, for example too short, may be transported to a waste container. Conveyor belts may be used for this.

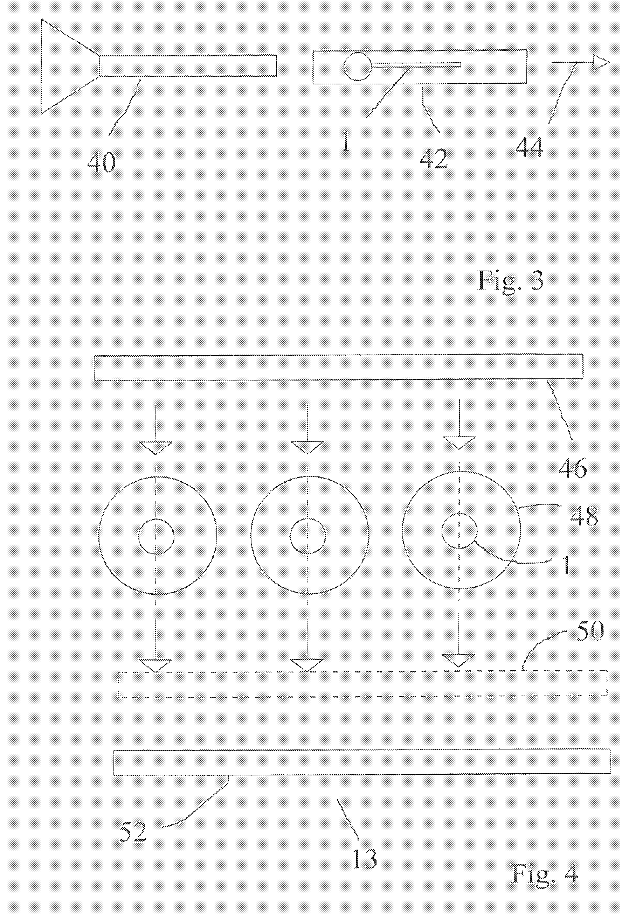

Fig. 3 shows a configuration for filling the evaluation holders 42. A placement compartment 40 is shown on the left, which is positioned practically horizontally in the position 29 of Fig. 2 opposite an evaluation holder 42. A suitable detection, for example by means of cams provided on the conveyor belts or an optical detection, activates a take-over mechanism. A plant 1, if present, is taken over by the evaluation holder owing to blower or suction air moving in the direction of arrow 44. For this purpose, the diameter of the evaluation holder 42 is slightly smaller than the corresponding dimension of the placement compartment 40. Furthermore, a stop mechanism (not shown) is provided on the right, such as a gauze with a spatially or temporally restricted presence, ensuring that the plant cannot shoot through the evaluation holder 42. After take-over, the placement compartment and the evaluation holder are removed from one another in mutually substantially perpendicular directions, preferably after having been stationary with respect to one another for a short period of time during the take-over.

Fig. 4 shows a configuration for evaluating the holders. The Figure shows three holders 48 in plan view. They are irradiated by a radiation mechanism 46 that radiates light more or less in parallel vertically downward through an optical system (not shown). The light is attenuated somewhat by the glass or otherwise transparent evaluation holders, but mainly by the plant or plants present therein. The light transmitted is imaged on a detection arrangement 52 by a suitable imaging system 50. As a result, the locally detected quantity of light can be assigned to a given evaluation holder from the group, and also to a certain longitudinal coordinate or longitudinal position of the respective holder. The connection to an A/D converter with processor, known per se, is not shown for simplicity's sake. The light path may run from top to bottom or vice versa. In the present example as shown in Fig. 2 and discussed above, a configuration was chosen in which a lamp (not visible in the drawing) is present in the box 12, which is impermeable to light. A digital camera 13 connected to a PC (Personal Computer, not shown) is located at the upper side of the box 12. An image is obtained here by means of radiation reflected against the plant 1.

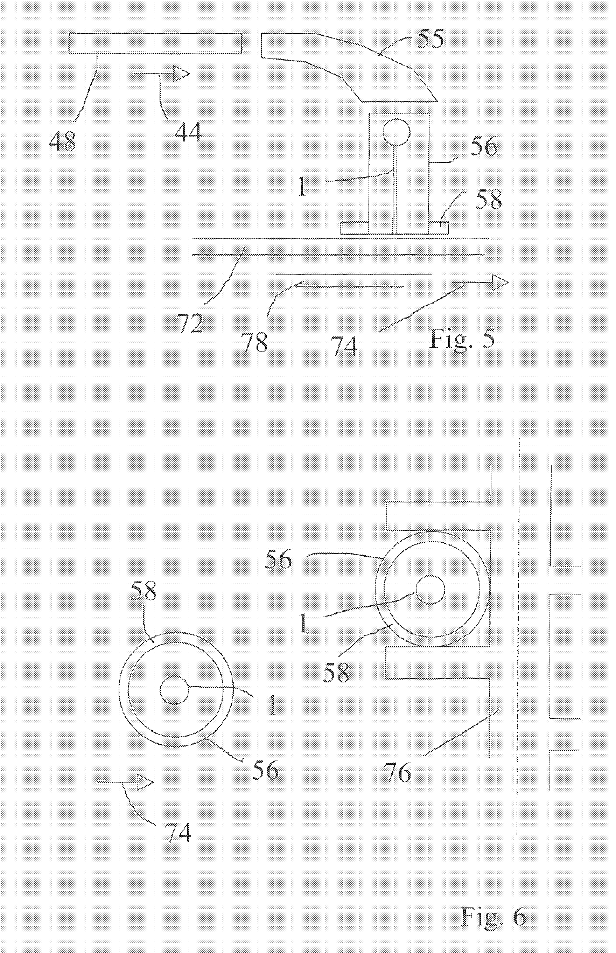

Fig. 5 shows a configuration for emptying the evaluation holders 48. The evaluation holder 48 is for this purpose placed opposite a handling holder 56. Since the axis of the latter is perpendicular to the axis of the evaluation holder 48, a hollow elbow 55 is arranged between the two. Depending on the outcome 'approved/rejected' of the processor mentioned with reference to Fig. 4, the plant 1 is subjected to blower or suction air along arrow 44. An approved plant 1 is received in the handling holder 56, whose inlet is, for example, somewhat widened. This handling holder preferably is a cylinder of hard plastic whose inner side is preferably provided with ridges. Said handling holder is additionally provided with a magnetically operating ring 58, for example of soft iron. Plants other than the approved ones are removed to the left, also by means of air, for example returned. A movable magnetic element 78 is present under the bottom plate 72 on which the holders 56 are arranged, which element 78 is capable of displacing the holders in the direction indicated by 74. This mechanism at the same time ensures that the holders 56 do not topple over.

Fig. 6 is a plan view illustrating a configuration for manipulating the handling holders 56. The bottom plate 72 of Fig. 5 here is the plane of drawing, below which the (moving) electromagnet 78 is located. The holders 56 are displaced thereby over the bottom plate 72 in the direction referenced 74, i.e. towards the grooves of a rotating worm wheel 76. The handling holders 56 are thus supplied in series to a potting mechanism (not shown) that plants the cuttings 1 in a matrix of containers with potting compost. A gripper as described in the patent specification NL 1 016 076, published May 1, 2002, may be used for this. A suitable number of grippers are present in a row therein, below the bottom plate at the area of the worm wheel 76 which is filled with the holders 56. When a portion of the bottom plate 72 is hinged away from below the holders 56, the cuttings will drop into said grippers, which then plant the cuttings 1 in a row of pots filled with compost. If a row of holders 56 having a different pitch is desired, the apparatus may be simply provided with a worm wheel 76 of different dimensions. A row of holders 56 may also be given a different pitch by means of conical teeth that are inserted between two adjoining holders 56 each time. It is noted that each holder 56 will contain an approved cutting, unlike each evaluation holder 48 and each placement compartment 24, i.e. a concentration of approved, pottable cuttings is obtained in this phase.

Fig. 6 is a flowchart of the holder evaluation procedure (cf. Fig. 4). The process is shown as a serial operation having a number of stages in the form of a number of boxes for simplicity's sake; feedback loops and the like have not been shown. In box 80, a two-dimensional image is taken of 18 glass evaluation holders, referred to as tubes hereinafter. In box 82, the image may be filtered, for example with a color filter. In box 84, the image is divided into sub-frames, so that the data for the individual tubes can be separated from one another. In box 86, one tube is individually inspected. In box 88, the tube is longitudinally subdivided into a number of sub-fields or cross-sections; this number is, for example, 20. In box 90, the values for these sub-fields are listed, for example after conversion into values relating to a degree of coverage by the plant. In box 92, values that are too low are deleted from the list: meaning that no part of a plant or just an irrelevantly small one ("sprig") is present locally. In box 94, the remaining values multiplied by a scale factor depending on the apparatus gives the length of the plant. In box 96, the sum of all remaining values multiplied by a scale factor gives the surface area in side elevation of the plant. In box 98, the upper half of the summed value divided by the lower half thereof gives the so-termed aspect ratio. This may be a measure, for example, for the relative leaf contents of the two halves, which may be important in deciding whether a plant of satisfactory shape can be grown, or whether the plant is upside down.

The plant is approved or rejected on the basis of certain parameters. This is done in two steps:
a. plant length or plant surface area too small: plant is rejected and discarded.
b. plant length or plant surface area too great: plant is returned; often there will be two plants (cuttings) in one holder in this case. The plant is then returned for repeat processing.
c. aspect ratio too low: plant is returned, it may possibly be upside down.
d. in all other cases: plant is approved and placed in a handling holder.

The invention was described above with reference to preferred embodiments. Those skilled in the art will be aware that many modifications may be applied thereto without departing from the scope of the appended claims. The embodiments should accordingly be regarded as merely illustrative, and no limitations are to be assumed in regard of the invention other than those recited in the claims.

## Claims

1. A method of separately handling plants which are supplied in holders, wherein the plants are sorted as to quality and only approved plants are admitted for further treatment, **characterized in that** such evaluation holders are transparent and are scanned by a light beam in transverse direction in a plurality of longitudinal positions, such that radiation transmission values or reflection values are evaluated in combination in a plurality of longitudinal positions so as to provide an indication on the presence of a plant of good quality, a plant of bad quality, or no plant at all.

2. A method as claimed in claim 1, wherein the evaluation holders are substantially tubular in shape, approved plants are taken out at one end of the evaluation holder by an air flow, and other evaluation holders with contents are emptied at a second end of the evaluation holder.

3. A method as claimed in claim 2, wherein plants taken out at said first end are accommodated in a handling holder.

4. A method as claimed in claim 3, wherein said handling holder is provided at one end with a magnetically operating element that is accommodated in a ring, and said handling holder is put in an upright position for further processing through cooperation between said element and a second magnetically operating element that is accommodated under a bottom plate.

5. A method as claimed in claim 1, wherein said light beam scans a row of evaluation holders in parallel, and the radiation transmission values or reflection values of the individual evaluation holders are separated by a digital processing element.

6. A method as claimed in claim 1, wherein a plant of good quality is one that is judged to have a sufficient longitudinal dimension, a sufficient lateral dimension, and/or a satisfactory aspect ratio.

7. A method as claimed in claim 1, wherein said plants are supplied in a two-dimensional matrix of placement compartments connected at an end face to said evaluation holders, whereupon the plants are blown or sucked by an air flow so as to be transferred into a row of said evaluation holders arranged in parallel.

8. A method as claimed in claim 7, wherein said transfer takes place while the axial directions of said evaluation holders and placement compartments are substantially horizontal.

9. A method as claimed in claim 7, wherein the connection at an end face takes place at one side of the tapering placement compartments where their openings are smallest.

10. An apparatus for implementing the method of claim 1 for the separate handling of plants supplied in holders, comprising a sorting mechanism whereby the plants are sorted as to quality and only approved plants are passed for further processing,
**characterized in that** such evaluation holders are transparent, and the apparatus comprises a light evaluation mechanism which scans the evaluation holders with a light beam in a plurality of longitudinal positions, and radiation transmission values or reflection values are evaluated in a processor in combination for a plurality of longitudinal positions so as to form an indication on the presence of a plant of good quality, a plant of bad quality, or no plant at all.

11. An apparatus as claimed in claim 10, wherein a handling holder is provided for accommodating plants taken out at said first end, which handling holder is provided at one end with a magnetically operating element accommodated in a ring for keeping the handling holder in an upright position through cooperation with a second magnetically operating element arranged below a bottom plate and for displacing the handling holder for further treatment.

12. An apparatus as claimed in claim 10, wherein said evaluation holders are fastened to a continuous loop of drive locations.

13. An apparatus as claimed in claim 10 or 12, wherein the evaluation holders are driven in an indexed manner such that after a first indexing step a number of evaluation holders are evaluated, after a further indexing step the plants of good quality are inserted into the handling holders, and after one or several more indexing steps the plants of bad quality are moved into a return track or reject track.
